# EUROPEAN PATENT SPECIFICATION

(11) **EP 0 655 353 B1**
(45) Date of publication and mention of the grant of the patent: **08.01.1997**
(21) Application number: 94308749.4
(22) Date of filing: 28.11.1994
(51) Int. Cl.: B60C 11/11, B60C 11/00

(54) **Low noise tyre**
Geräuscharmer Reifen
Bandage pneumatique peu bruyant

(30) Priority: 30.11.1993 JP 329782/93
(43) Date of publication of application: 31.05.1995
(73) Proprietor: Sumitomo Rubber Industries Ltd., Kobe-shi, Hyogo-ken (JP)
(72) Inventor: Kajita, Hiroaki, Nishinomiya-shi, Hyogo-ken (JP)
(74) Representative: Stewart, Charles Geoffrey

(56) References cited:
- EP-A- 0 233 135
- EP-A- 0 354 718
- DE-U- 8 524 883
- US-A- 5 109 903
- PATENT ABSTRACTS OF JAPAN vol. 14, no. 450 (M-1030) 27 September 1990 & JP-A-02 179 508 (YOKOHAMA TIRE&RUBBER CO LTD.) 12 July 1990
- PATENT ABSTRACTS OF JAPAN vol. 8, no. 5 (M-267) (1442) 11 January 1984 & JP-A-58 170 603 (YOKOHAMA TIRE&RUBBER CO LTD.) 7 October 1983
- PATENT ABSTRACTS OF JAPAN vol. 7, no. 50 (M-197) (1195) 26 February 1983 & JP-A-57 198 102 (YOKOHAMA TIRE&RUBBER CO LTD.) 4 December 1982

## Description

The present invention relates to a low noise tyre having a block pattern.

In off-the-road cars, tyres having a block type tread pattern are widely used for their superior grip performance. In recent years, as the expressway network is developed, the need for off-the-road cars with block pattern tyres to run on well-paved expressways is increasing. It is required to reduce the running noise from such a block pattern tyre since the block pattern tyres generate much noise when running on well-paved roads at high speed.

A running noise from a tread pattern, the so-called impact noise, is known. During running, especially high speed running, tread blocks repeatedly contact with and detach from the ground. As a result, the blocks are vibrated, and the vibration is transmitted to the tyre sidewall portion and amplified to generate audible noise.

Further, a so called air resonance noise is known. Vibrations of the tread rubber vibrate the air existing in the tubes formed between the ground and the tread grooves in the ground contacting patch, and the columns of air resonate at a certain frequency.

If the depth of the tread grooves is decreased, impact noise and resonance noise can be reduced, but the road grip performance particularly during off-the-road running especially on-the-snow running is greatly decreased.

It is therefore, an object of the present invention to provide a low noise tyre having a block type tread pattern, in which the running noise during high-speed running on a well-paved road is reduced without sacrificing off-the-road performance especially on-the-snow performance.

According to the present invention a low noise tyre comprises a tread portion, provided with a plurality of main grooves extending in the tyre circumferential direction and a plurality of axial grooves extending in the tyre axial direction to divide the tread portion into blocks, each said block having a top plane and side planes defining corners, characterised in that the corners adjacent to the main grooves are cut off by a triangular plane having a horizontal edge between the triangular plane and the top plane and two oblique edges each between the triangular plane and one of said side planes, the height of the radially innermost end of the triangular plane from the bottom of the main grooves being in the range of from 0.4 to 0.6 times the depth of the main grooves, the circumferential length of the horizontal edge being in the range of from 2 to 4 mm, and the axial length of the horizontal edge being in the range of from 2 to 4 mm.

An embodiment of the present invention will now be described in detail, by way of example only, in conjunction with the accompanying drawings in which:-
Fig.1 is a developed plan view of an embodiment of the present invention showing the tread pattern thereof;
Fig.2 is a perspective view thereof;
Fig.3 is a diagram showing the foot print thereof;
Fig.4 is a developed plan view showing a conventional tread pattern; and
Fig.5 is a diagram showing the foot print thereof.

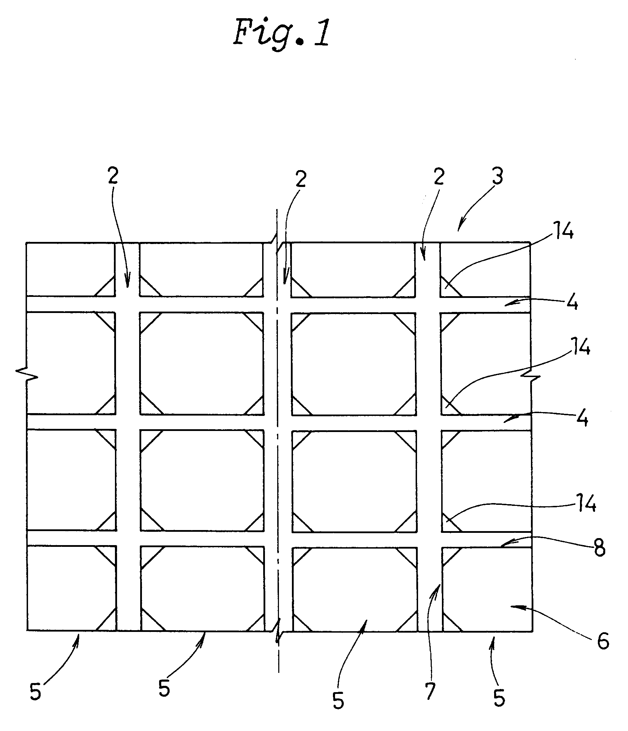

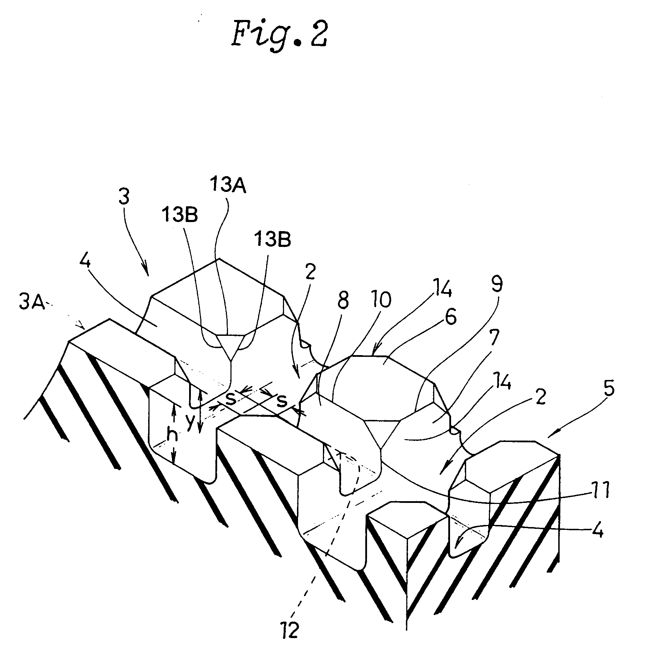

In Figs.1 and 2, the low noise tyre according to the present invention is a pneumatic radial tyre for the four-wheel-drive (4WD) cars. The tyre comprises a tread portion 3, a pair of axially spaced bead portions, a pair of sidewalls, a bead core or wire disposed in each bead portion, a radial ply carcass turned up around the bead cores, and a tread reinforcing belt, such as a steel breaker and nylon band, disposed radially outside the carcass.

The tread portion 3 is provided with a block pattern. The tread pattern consists of blocks 5 divided by circumferentially extending main grooves 2 and axially extending grooves 4.

Each of the main grooves 2 extends continuously in the circumferential direction of the tyre. In this embodiment, there are only three such grooves and they extend straight, parallel to the tyre circumferential direction.

The axial grooves 4 extend axially of the tyre and include inner grooves and outer grooves. The inner grooves extend axially between the axially adjacent circumferential main grooves 2, and the outer grooves extend axially between the axially outermost circumferential main grooves 2 and the tread edges 3A.

In this embodiment, all the axial grooves 4 are straight and intersect the circumferential main grooves 4 at an angle of substantially 90 degrees.

The axial grooves 4 are arranged at irregular pitches in the circumferential direction of the tyre, but it is also possible to arrange at a regular pitch.

Accordingly, the tread portion 3 is divided into four rows of blocks 5 by the circumferential main grooves 2 and axial grooves 4. Each of the blocks 5 has a top plane 6 which contacts the ground on use of the tyre, a pair of opposite circumferential side planes 8 each facing one of the axial grooves 4, and a pair of opposite axial side planes 7 each facing either one of the circumferential main grooves 2 or the axial outside of the tyre.

The top plane 6, one of the axial side planes 7 and one of the circumferential side planes 8 intersect each other to form four corners 12 on each block 5.

According to the present invention, the corners 12 adjacent to the main grooves 2 are cut off to produce triangular buffer planes 14.

Thus as can be seen each triangular buffer plane 14 intersects the top plane 6, the axial side plane 7 and the circumferential side plane 8 to define three edges, namely a horizontal edge 13A and two oblique edges 13B as shown in Fig.2.

In this embodiment, the corners 12 not adjacent to the main grooves 2, which are the corners 12 adjacent to the tread edges 13A, are not cut off, but they may be cut off.

The radial height (y) measured from the bottom of the adjacent circumferential main groove 2 to the radially innermost end of the buffer plane 14 which is the vertex opposite to the horizontal edge 13A, is 0.4 to 0.6 times the depth (h) of the circumferential main grooves 2. In other words, in each of the buffer planes 14, the radial distance between the horizontal edge 13A and the opposite vertex is 0.6 to 0.4 times the depth (h) of the adjacent circumferential main groove 2.

Further, the axial length S of the horizontal edge 13A is in the range of from 2 to 4 mm, and also the circumferential length S of the same edge is in the range of from 2 to 4 mm.

As a result, the corners which have a lower rigidity and would otherwise be liable to vibrate are eliminated, and the blocks are difficult to vibrate. Further, as the corners are cut off, the length of the block edge which comes into contact with the ground at the same time is decreased, and the impact sound therefrom is decreased. Therefore, the impact noise is effectively reduced. However, as the circumferential component and the axial component of the edges of each block are not decreased, the gripping force derived therefrom is substantially not decreased, and the snow grip performance is maintained.

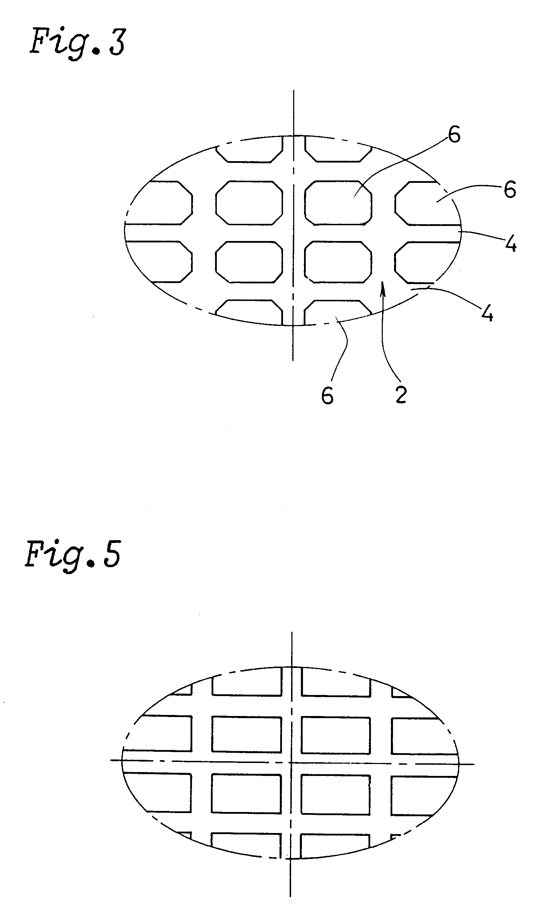

Furthermore, as shown in Fig.3, the above-mentioned air tube formed in the ground contacting patch between the ground and the main and axial grooves has a width which varies in the longitudinal direction. As a result, the resonance mode is altered from a simple one to a complex one, and the air resonance noise is reduced.

If the height (y) is more than 0.6 times, the vibration is not effectively reduced. If the height (y) is less than 0.4 times, the rigidity of the block 6 is decreased, and the block is liable to wear and the high-speed steering stability is decreased.

If the circumferential and axial lengths S are less than 2 mm, the vibration is not reduced. If the lengths S are more than 4 mm, the snow performance is liable to decrease.

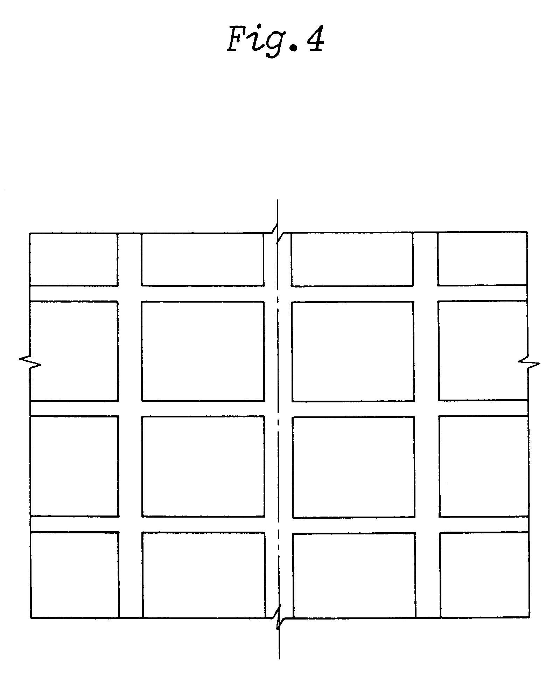

Test tyres of size 265/70R16 having the tread pattern shown in Fig.1 and the tread pattern shown in Fig.4 were tested for the following performance factors. The specifications and test results are shown in Table 1.

### 1) Running noise

According to the "Test Procedure for Tyre Noise" specified in Japanese JASO-C606, a four-wheel-drive car provided with test tyres was coasted for 50 meter distance at a speed of 60 km/h on a straight test course, and the maximum noise sound level was measured with a microphone set at a 1.2 meter height from the road surface and 7.5 meters sideways from the running centre line in the midpoint of the course.

### 2) Snow performance

By starting, accelerating and braking the test car provided with the test tyres, the snow grip performance was evaluated by the driver's feeling. The results are indicated by an index based on the reference tyre being 100. The larger the value, the better the traction performance.

From the test results, it was confirmed that the example tyres 1, 2 and 3 were improved in running noise in comparison with the reference tyres respectively, with the snow performance being maintained.

As described above, in the low noise tyre of the present invention, the running noise during running on well-paved roads can be reduced without sacrificing off-the-road running performance especially snow performance.

**Table 1**

| | Ref.1 | Ex.1 | Ref.2 | Ex.2 | Ref.3 | Ex.3 |
|---|---|---|---|---|---|---|
| Tyre size | 265/70R16 | 265/70R16 | 225/70R16 | 225/70R16 | 185/70R16 | 185/70R16 |

| Main groove | | | | | | |
|---|---|---|---|---|---|---|
| Number | 3 | 3 | 3 | 3 | 3 | 3 |
| Depth (mm) | 23 | 23 | 19 | 19 | 15 | 15 |

| Block | | | | | | |
|---|---|---|---|---|---|---|
| Circumferential length (mm) | 43 | 43 | 37 | 37 | 29 | 29 |
| Axial width (mm) | 54 | 54 | 46 | 46 | 38 | 38 |

| Cut-off corner | | | | | | |
|---|---|---|---|---|---|---|
| Height y (mm) | - | 13 | - | 9.5 | - | 7 |
| Circumferential length (mm) | - | 4 | - | 3.3 | - | 2.5 |
| Axial length (mm) | - | 4 | - | 3.3 | - | 2.5 |
| Running noise dB(A) | 70 | 69.5 | 69 | 68.5 | 67 | 66.5 |
| Snow performance (index) | 100 | 100 | 100 | 100 | 100 | 100 |

## Claims

1. A low noise tyre comprising a tread portion (3), provided with a plurality of main grooves (2) extending in the tyre circumferential direction and a plurality of axial grooves (4) extending in the tyre axial direction to divide the tread portion (3) into blocks (5), each said block (5) having a top plane (6) and side planes (7,8) defining corners (12), characterised in that the corners (12) adjacent to the main grooves (2) are cut off by a triangular plane (14) having a horizontal edge (13A) between the triangular plane (14) and the top plane (6) and two oblique edges (13B) each between the triangular plane (14) and one of said side planes (7,8), the height (y) of the radially innermost end of the triangular plane (14) from the bottom of the main grooves (2) being in the range of from 0.4 to 0.6 times the depth (h) of the main grooves, the circumferential length (s) of the horizontal edge (13A) being in the range of from 2 to 4 mm, and the axial length (s) of the horizontal edge (13A) being in the range of from 2 to 4 mm.

2. A low noise tyre according to claim 1, characterised in that all the corners (12) of each block (5) are cut off by triangular planes (14).

3. A low noise tyre according to claim 1, characterised in that all the main grooves (2) extend straight and parallel to the circumferential direction of the tyre, and all the axial grooves (4) extend straight and parallel with the axial direction of the tyre.

4. A low noise tyre according to claim 1, 2 or 3, characterised in that the number of the main grooves (2) is three, whereby the blocks (5) in the tread portion are arranged in four rows.

## Patentansprüche

1. Geräuscharmer Reifen, mit einem Laufflächen-Abschnitt (3), der mit einer Vielzahl von sich in die Reifen-Umfangsrichtung erstreckenden Haupt-Rillen (2) und einer Vielzahl von sich in die Reifen-Axial-Richtung erstreckenden Axial-Rillen (4) versehen ist, um den Laufflächen-Abschnitt (3) in Blöcke (5) zu gliedern, wobei jeder Block (5) eine oberste Ebene (6) und Seiten-Ebenen (7, 8) aufweist, die Ecken (12) definieren,
dadurch **gekennzeichnet**,
daß die den Haupt-Rillen (2) benachbarten Ecken (12) durch eine dreieckige Ebene (14) abgeschnitten werden, die eine waagrechte Kante (13A) zwischen der dreieckigen Ebene (14) und der obersten Ebene (6) und zwei schrägen Kanten (13B) jeweils zwischen der dreieckigen Ebene (14) und einer der Seiten-Ebenen (7,8) aufweist, wobei die Höhe (y) des radial innersten Endes der dreieckigen Ebene (14) vom untersten Teil der Haupt-Rillen (2) im Bereich des 0,4 bis 0,6-fachen der Tiefe (h) der Haupt-Rillen liegt, die Umfangs-Länge (s) der waagrechten Kante (13A) im Bereich von 2 bis 4 mm liegt, und die axiale Länge (s) der waagrechten Kante (13A) im Bereich von 2 bis 4 mm liegt.

2. Geräuscharmer Reifen nach Anspruch 1,
dadurch **gekennzeichnet**,
daß alle der Ecken (12) jedes Blocks (5) durch dreieckige Ebenen (14) abgeschnitten werden.

3. Geräuscharmer Reifen nach Anspruch 1,
dadurch **gekennzeichnet**,
daß alle der Haupt-Rillen (2) sich gerade und parallel zur Umfangsrichtung des Reifens erstrecken, und alle der Axial-Rillen (4) sich gerade und parallel mit der Axial-Richtung des Reifens erstrecken.

4. Geräuscharmer Reifen nach Anspruch 1, 2 oder 3,
dadurch **gekennzeichnet**,
daß die Anzahl der Haupt-Rillen (2) drei beträgt, wodurch die Blöcke (5) in dem Laufflächen-Abschnitt in vier Reihen angeordnet sind.

## Revendications

1. Pneumatique peu bruyant comprenant une partie (3) de bande de roulement ayant plusieurs gorges principales (2) placées dans la direction circonférentielle du pneumatique et plusieurs gorges axiales (4) disposées dans la direction axiale du pneumatique de manière que la partie (3) de bande de roulement soit divisée en blocs (5), chaque bloc (5) ayant un plan supérieur (6) et des plans latéraux (7, 8) délimitant des coins (12), caractérisé en ce que les coins (12) adjacents aux gorges principales (2) sont découpés par un plan triangulaire (14) ayant un bord horizontal (13A) entre le plan triangulaire (14) et le plan supérieur (6) et deux bords obliques (13B) placés chacun entre le plan triangulaire (14) et l'un des plans latéraux (7, 8), la hauteur (y) de l'extrémité radialement la plus interne du plan triangulaire (14) par rapport au fond des gorges principales (2) étant comprise entre 0,4 et 0,6 fois la profondeur (h) des gorges principales, la longueur circonférentielle (s) du bord horizontal (13A) étant comprise entre 2 et 4 mm, et la longueur axiale (s) du bord horizontal (13A) étant comprise entre 2 et 4 mm.

2. Pneumatique peu bruyant selon la revendication 1, caractérisé en ce que tous les coins (12) de chaque bloc (5) sont découpés par des plans triangulaires (14).

3. Pneumatique peu bruyant selon la revendication 1, caractérisé en ce que toutes les gorges principales (2) sont disposées de manière rectiligne parallèle à la direction circonférentielle du pneumatique, et toutes les gorges axiales (4) sont rectilignes et parallèles à la direction axiale du pneumatique.

4. Pneumatique peu bruyant selon la revendication 1, 2 ou 3, caractérisé en ce que le nombre de gorges principales (2) est égal à trois, Si bien que les blocs (5) de la partie de bande de roulement sont disposés en quatre lignes.
